Europäisches Patentamt

European Patent Office

Office européen des brevets

(19)

(11) **EP 1 427 167 A2**

## (12) DEMANDE DE BREVET EUROPEEN

(43) Date de publication:
**09.06.2004 Bulletin 2004/24**

(51) Int Cl.⁷: **H04L 29/06**

(21) Numéro de dépôt: **03292853.3**

(22) Date de dépôt: **17.11.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **02.12.2002 FR 0215126**

(71) Demandeur: **ALCATEL**
**75008 Paris (FR)**

(72) Inventeurs:
• **Galand, Damien**
**92370 Chaville (FR)**

• **Clevy, Laurent**
**28000 Chartres (FR)**
• **Marce, Olivier**
**91300 Massy (FR)**

(74) Mandataire: **Sciaux, Edmond et al**
**Compagnie Financière Alcatel**
**Département de Propriété Industrielle,**
**5, rue Noel Pons**
**92734 Nanterre Cedex (FR)**

(54) **Dispositif d'accés à un réseau de télécommunication pour la dégradation sélective des flots de données**

(57)　Dispositif d'accès ($R_A$) à un réseau de télécommunication (N) comportant

• des moyens pour transmettre des flots de données entre au moins un premier client de télécommunication (A) connectés coeur de réseau au moyen d'un réseau d'accès ($N_A$) possédant des performances de débits moindres que coeur de réseau

(N) et au moins un second client de télécommunication (B, S),
• des moyens de dégradation pour dégrader au moins un paramètre de qualité d'au moins un flot de données

L'invention se caractérise en ce que les moyens de dégradation font appel à un module associé à chaque session, pour réaliser la dégradation.

FIG_1

**Description**

La présente invention est relative aux réseaux de télécommunication, permettant la transmission de flots de données multimédias. Plus précisément elle concerne les dispositifs d'accès à ces réseaux de télécommunication.

L'invention s'applique particulièrement bien aux réseaux de télécommunication à commutation de paquets, notamment ceux basés sur une pile protocolaire de type IPv4 ou IPv6 (*Internet Protocol, version 4 ou 6*, respectivement).

Un des intérêts de ce type de réseau de télécommunication est de pouvoir facilement transporter des flots de données multimédias.

Dans la suite, on entend par flot de données multimédia, ou plus simplement « flot multimédia », un ensemble de données transmises à travers le réseau, représentant des informations de nature diverses telles que de la voix, de la vidéo, du texte, des images etc.

Dans le cadre d'un réseau à commutation de paquets, ces flots de données sont structurés sous la forme d'une suite de paquets.

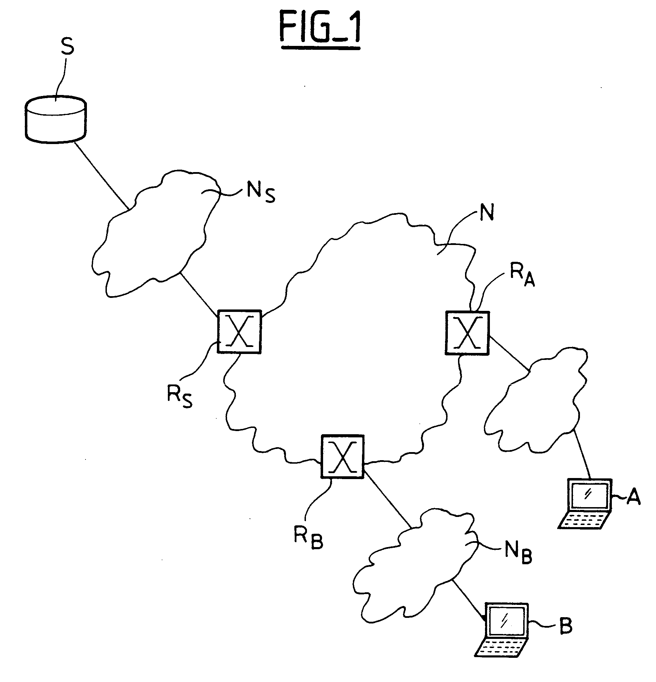

La figure 1 représente un réseau de télécommunication N selon l'art antérieur. À ce réseau sont connectés des clients A, B, S. Ces clients peuvent être des utilisateurs A, B ou des serveurs fournisseurs de services S.

Entre ces différents clients, des sessions peuvent être établies, c'est-à-dire des transmissions d'informations consécutives à une requête explicite d'un des partis. La transmission d'information peut nécessiter l'établissement de plusieurs flots de données multimédias. Par exemple, dans le cas d'une vidéoconférence, selon une mise en oeuvre possible, on pourra avoir deux flots de données multimédias : un flot concernant la voix, et un flot concernant la vidéo.

Ces sessions peuvent être établies :

- entre un serveur S fournisseur de services et un utilisateur A, B : c'est notamment le cas pour un service de vidéo à la demande VoD (*Video on Demand*).
- Entre deux utilisateurs A, B : c'est notamment le cas pour un service de vidéoconférence.

Chaque client A, B, S est connecté au réseau par des dispositifs d'accès $R_A$, $R_B$, $R_S$, composés d'un ou plusieurs éléments de réseau (des routeurs, dans le cas d'un réseau de télécommunication basé sur les piles protocolaires IPv4 et/ou IPv6), au moyen de réseaux d'accès $N_A$, $N_B$, $N_S$.

Classiquement, les capacités de transmission des réseaux d'accès $N_A$, $N_B$ sont bien moindres que celles du réseau principal N. Typiquement, lorsque les clients A, B sont des usagers particuliers ou des petites entreprises, les réseaux d'accès sont le réseau téléphonique classique (POTS pour « *Plain Old Telephone Service* » en anglais). Même en bénéficiant des technologies d'accès de type xDSL (*Digital Subscriber Line*), les débits maximaux possibles sur les réseaux d'accès restent inférieurs aux débits possibles dans le coeur de réseau N (*Core Network,* en anglais). Il en résulte que les dispositifs d'accès $R_A$, $R_B$, $R_S$ sont des points de congestion.

Inversement, le réseau d'accès $N_S$ est classiquement suffisamment bien dimensionné, mais c'est alors dans le coeur de réseau N que la congestion peut intervenir lorsqu'un grand nombre d'utilisateurs sont en communication avec le serveur fournisseur de services S. Dans cette situation, il est avantageux de n'envoyer au coeur de réseau N que les données qui pourront être transmises aux utilisateurs.

Aussi, les dispositifs d'accès vont dégrader la transmission de tous ou certains flots de données. Cette dégradation est classiquement faite de façon arbitraire. Le brevet américain US6434624 de la société Cisco enseigne d'appliquer des traitements de qualité de service à certains flots de données. Ces traitements sont paramétrés par des règles de police (*policy rules*). Par nature, donc, les traitements sont décidés par un organe central du réseau de communication, qui ne peut avoir connaissance de la nature des informations véhiculées par les flots de données.

Or il s'avère que la sensibilité à la dégradation des flots de données dépend de la nature de l'information qu'ils véhiculent.

À titre d'exemple, un flot de données contenant de la voix est très sensible à une dégradation de la gigue (*jitter*, en langue anglaise), mais peu à une réduction de la bande passante. Un flot de données contenant de la vidéo encodée selon le standard MPEG (*Motion Photographic Expert Group*) est, quant-à-lui, sensible à la perte de paquets, car ces paquets peuvent contenir des informations clefs pour permettre le décodage des paquets ultérieurs : les « P-pictures » sont codées à partir des « I-pictures » précédentes, selon un codage différentiel.

La demanderesse a donc remarqué qu'il était important de tenir compte de la nature de l'information véhiculée pour déterminer :

1. quels flots de données devaient être dégradés de préférence aux autres, et,
2. de quelles façons, ils devaient être dégradés.

Pour ce faire, l'invention a pour objet un dispositif d'accès à un réseau de télécommunication comportant

- des moyens pour transmettre des flots de données entre au moins un premier client de télécommunication connecté au réseau de télécommunication au moyen d'un réseau d'accès possédant des performances de débits moindres que le réseau de télécommunication et au moins un second client de télécommunication accessible au travers dudit réseau de télécommunication, les flots d'information étant organisés en session, chaque flot de données d'une même session mettant en relation les mêmes clients de télécommunication, et

• des moyens de dégradation pour dégrader au moins un paramètre de qualité d'au moins un des flots de données afin de pallier la différence de débits entre le réseau de télécommunication et le réseau d'accès.

L'invention se caractérise en ce que les moyens de dégradation font appel à un module associé à chaque session, pour réaliser la dégradation, cet module étant déterminé par le premier client.

Ainsi, les dispositifs d'accès selon l'invention permettent une dégradation des transmissions des flots de données, appartenant à une session donnée, qui est adaptée à la nature des informations transmises.

Ils ont l'avantage supplémentaire de permettre une adaptation aussi précise que désirée : non seulement il peut être tenu compte d'une classification des informations véhiculées en quelques grandes catégories : vidéo, audio... mais aussi de la méthode d'encodage de ces informations. En effet, l'algorithme de codage des informations a une influence très importante sur l'impact que peut avoir une dégradation d'un paramètre de QoS (*Quality of Service* ou qualité de service) sur la qualité finale de l'information transmise.

Selon l'invention, le module est déterminé par le premier client. Cette détermination peut éventuellement être réalisée en coopération avec l'utilisateur final, notamment au moyen de paramètres de configuration.

Selon un premier mode de réalisation de l'invention, le module est principalement constitué du code exécutable permettant la dégradation du ou des paramètres de qualité.

Le module peut par exemple être transmis dans la charge utile d'un paquet actif transmis par le premier client (A). Alternativement, il peut être téléchargé depuis un serveur de codes et identifié par un identificateur contenu dans un paquet actif transmis par le premier client.

Selon un second mode de réalisation, le module est principalement constitué d'un ensemble de tables mettant en correspondance pour chaque flot de données de la session, les paramètres de qualité et les impacts d'une dégradation de ces paramètres de qualité sur la qualité du flot de données concerné.

Selon un troisième mode de réalisation, le module est principalement constitué d'un ensemble d'expressions mathématiques liant, pour chaque flot de données de la session, les paramètres de qualité et les impacts d'une dégradation de ces paramètres de qualité sur la qualité du flot de données concerné.

Selon un quatrième mode de réalisation, le module est constitué d'un ensemble de règles de police fourni par un serveur de règles.

Les communications avec le serveur de règles peuvent par exemple être conformes au protocole CORBA.

L'invention et ses avantages apparaîtront de façon plus claire dans la description de mises en oeuvre non limitatives qui va suivre, en liaison avec les figures annexées.

La figure 1, déjà commentée, illustre le contexte dans lequel s'insère la présente invention.

Les figures 2a et 2b schématisent trois mises en oeuvre possibles de l'invention.

La figure 3 représente un organigramme de l'algorithme qui peut être mis en oeuvre par l'invention.

La figure 4 illustre une architecture fonctionnelle d'un routeur.

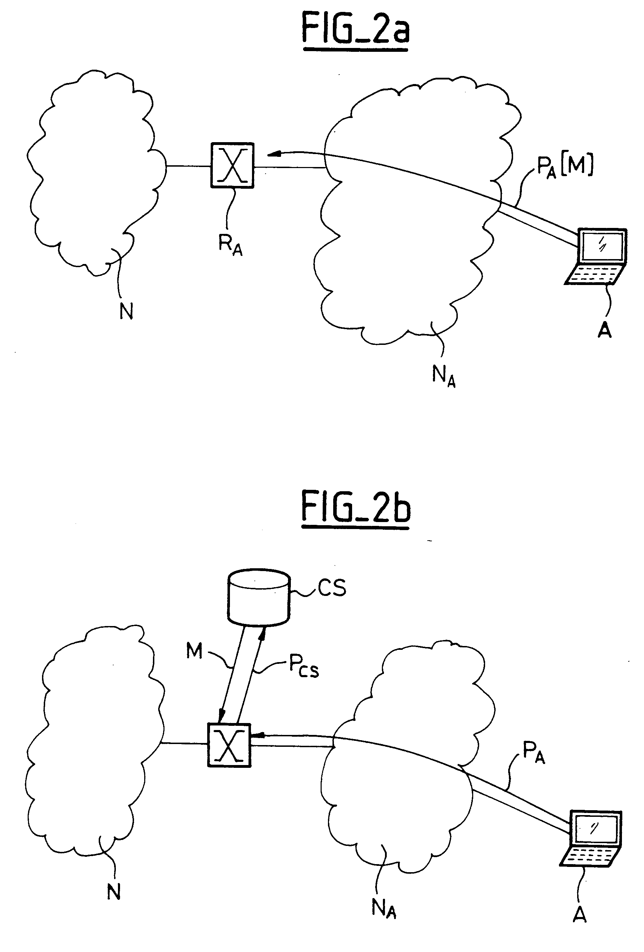

La figure 2a illustre une première mise en oeuvre de l'invention utilisant le principe des réseaux actifs. Les réseaux actifs sont par exemple décrit dans les articles :

• « *Toward* an *active network architecture* » de D. Tennenhouse et D. Wetherall, paru en 1996 dans la revue *Computer Communication Review* (26, 2, pages 5 et suivantes).

• « *Tutorial on Active Networks and its Management* » de Marcus Brunner.

Le principe des réseaux actifs est de donner aux éléments de réseau des capacités de traitement de codes exécutables qui peuvent être véhiculés dans la charge utile des paquets eux-mêmes ou bien téléchargées depuis un serveur et notamment identifié par un identificateur contenu dans ces paquets. Les éléments de réseau dotés de telles capacités sont classiquement appelés « routeurs actifs », et les messages (ou paquets) contenant du code exécutable ou un identificateur d'un code exécutable, sont appelés « messages (ou paquets) actifs ».

Selon cette première mise en oeuvre illustrée par la figure 2a, le code exécutable, habituellement appelé code actif, est véhiculé par les paquets eux-mêmes.

Dans cet exemple, le client de télécommunication A a ouvert une session multimédia avec un (ou plusieurs) autre client, non représenté sur la figure. Le dispositif d'accès $R_A$ permet la transmission de flots de données appartenant à cette session, entre le client de télécommunication A, par l'intermédiaire du réseau d'accès $N_A$ et le (ou les) autre client par l'intermédiaire du réseau de télécommunication N.

Le client de télécommunication A adresse un message $P_A$ au dispositif d'accès $R_A$. Ce message $P_A$ contient un module M constitué de code actif. Dans cet exemple, le dispositif d'accès $R_A$ est un routeur actif. Il est donc à même de lire le code actif constituant le module M et le charger.

Ainsi, à chaque fois que le dispositif d'accès $R_A$ a besoin de diminuer un ou plusieurs paramètres de qualité d'un ou plusieurs flots de données, il fait appel au module M ainsi chargé, associé à la session à laquelle appartiennent les flots de données en question.

Le code actif constitutif de ce module M est prévu pour mettre en oeuvre le processus de dégradation adapté à la session.

Selon un mode de réalisation, ce module M peut prendre la forme d'une fonction (au sens de la programmation procédurale classique), apte à être appelée par le logiciel principal contenu dans le dispositif d'accès $R_A$. Notamment, ce logiciel principal et cette fonction peuvent être écrites selon un langage de type Java™ afin de tirer profit des mécanismes de chargement dynamique de ces langages.

Une telle fonction, nommée ici « ReduceBandwidth » peut avoir comme entête :

> Function ReduceBandwidth(Flows Fl...Fn, quantity q)
> Les mots « *Function* », « *Flows* » et « *quantity* » sont des mots réservés définissant respectivement une fonction, un type de données spécifique aux flots de données, et un type de données spécifique pour une quantité q de dégradation. Cet en-tête peut former l'interface entre le logiciel principal et la fonction chargée, afin de leur permettre de coopérer.

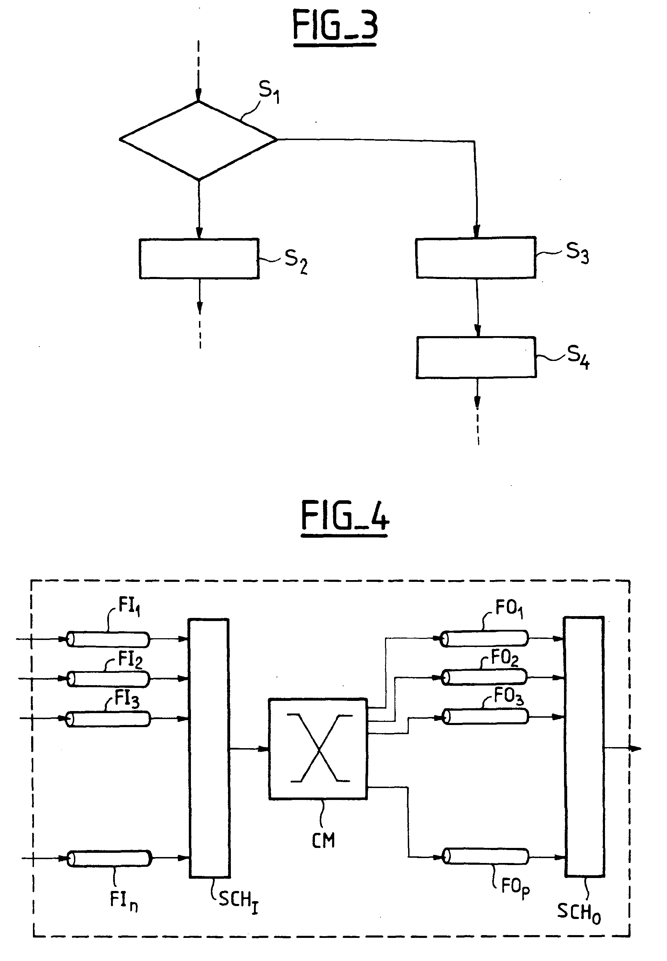

Un exemple de schéma d'algorithme implémenté par le module M peut être tel qu'illustré par l'organigramme de la figure 3.

Dans une étape $S_1$, on détermine si un des flots de données constitutifs de la session contient des données non compressées.

Si oui, alors, dans une étape $S_2$, on réduit la bande passante allouée à ce flot de données.

Si non, alors, dans une étape $S_3$, on évalue pour chacun des flots de données de la session, l'impact d'une dégradation q. Puis, dans une étape $S_4$, on dégrade en priorité la flot de données le moins impacté par cette dégradation.

Bien entendu, d'autres schémas algorithmiques sont possibles. Notamment, il est possible de répartir la quantité q de dégradation souhaitée sur plusieurs flots de données plutôt que d'impacter un seul flot de données.

Une deuxième mise en oeuvre de l'invention consiste à tirer profit du second mode d'implémentation de la technique des réseaux actifs, c'est-à-dire à transmettre dans les messages actifs, un identificateur du code actif à charger, celui-ci pouvant être téléchargé depuis un serveur de codes. Cette mise en oeuvre est illustrée par la figure 2b.

Sur la figure 2b, le dispositif d'accès $R_A$ est en relation avec un serveur de codes CS. Les communications entre ces deux éléments peuvent être effectuées au moyen du réseau de télécommunication N ou au moyen d'un réseau dédié. Le serveur de codes peut être commun aux différents dispositifs d'accès au réseau de télécommunication N ($R_B$, S sur la figure 1, non représentés ici). Alternativement, notamment dans le cas de grand réseau de télécommunication, il peut être prévu de disposer de plusieurs serveurs de codes CS, éventuellement communicants entre eux afin de synchroniser leur contenu.

Dans cet exemple, le client de télécommunication A a ouvert une session multimédia avec un (ou plusieurs) autre client non représenté. Le dispositif d'accès $R_A$ permet la transmission de flots de données appartenant à cette session, entre le client de télécommunication A, par l'intermédiaire du réseau d'accès $N_A$ et le (ou les) autre client par l'intermédiaire du réseau de télécommunication N.

Le client de télécommunication A adresse un message $P_A$ au dispositif d'accès $R_A$. Ce message $P_A$ contient des informations permettant de déterminer le module désiré. Ces informations peuvent par exemple être un identificateur.

Dans ce cas, l'identificateur peut simplement être transmis dans une requête $P_{CS}$ adressée au serveur de codes CS, et identifier directement un module particulier. Le module M peut alors être téléchargé sur le dispositif d'accès $R_A$.

Le chargement et l'interfaçage du code actif constitutif du module M peuvent être effectués de façon identique ou similaire à celle indiquée pour la première mise en oeuvre. Les schémas algorithmiques peuvent aussi être identiques.

Selon une autre mise en oeuvre de l'invention, le module M n'est pas constitué de code actif mais d'une table de correspondance associée à chaque flot de données constitutif de la session, entre les différents paramètres de qualité et l'impact d'une dégradation de ce paramètre sur la qualité du flot de données.

Par exemple, pour un flot de données véhiculant de la voix non compressée (par exemple pour une application de téléphonie sur IP ou VoIP pour *Voice Over IP*, en langue anglaise), une telle table de correspondance peut contenir l'information suivante :

| Gigue (*jitter*) | 3 |
|---|---|
| Perte de paquets | 2 |

La seconde colonne indique sous une forme numérique de 0 à 3, l'impact de la dégradation du paramètre de qualité correspondant, un chiffre élevé indiquant un impact important.

On voit dans cet exemple, qu'une dégradation de la gigue (c'est-à-dire la variation des écarts entre 2 messages successifs du flot de données) est bien plus importante qu'une dégradation de la bande passante.

Pareillement, une telle table de correspondance pour un flot de données véhiculant de la vidéo compressée selon un algorithme de compression MPEG (*Motion Photographic Expert Group*), peut contenir l'information suivante :

| Perte de paquets | 3 |
|---|---|
| Gigue | 1 |

On voit dans cet exemple que la perte de paquets est un paramètre de qualité dont la dégradation possède un fort impact sur la qualité résultante, au contraire de la gigue.

En effet, comme il a été évoqué précédemment, certains paquets peuvent contenir des informations indispensables à la décompression des paquets ultérieurs : certaines images fixes constitutives de la vidéo sont codées en différentiel par rapport à des images clés. Aussi, la perte des paquets contenant ces images clés peut interdire de reconstituer les images ultérieures codées « en différentiel ».

Pour une session multimédia comportant ces deux flots de données, le dispositif d'accès $R_A$ est en mesure de choisir la stratégie minimisant l'impact de la dégradation nécessaire.

Il peut par exemple sommer les impacts de chaque paramètre de qualité des tables de correspondance des flots de données de la session multimédia. Il obtient alors :

| Perte de paquets | 5 |
|---|---|
| Gigue | 4 |

L'impact de la perte de paquets étant plus important, il peut choisir une stratégie consistant à augmenter la gigue, c'est-à-dire concrètement, à laisser s'accroître les files d'attente à l'intérieur du dispositif d'accès.

Une autre stratégie consiste à différentier les flots de données au sein d'une même session. Ainsi, il peut favoriser la perte de paquets pour le flot de données véhiculant de la voix ou des données non compressées, et au contraire favoriser l'accroissement de la gigue, pour le flot de données véhiculant de la vidéo compressée en MPEG.

Bien entendu, ces exemples ne sont donnés qu'à titre indicatif, et les paramètres considérés dans la première colonne peuvent avoir une sémantique beaucoup plus précise. Par exemple, il peut s'agir de la perte de paquets contenant des données d'une « P-picture », dans le cas de données MPEG.

Il est par ailleurs, possible d'introduire une pondération associée aux flots de données d'une même session. Par exemple, en mettant une valeur d'impact de dégradation plus importante pour l'audio, cela aura pour conséquence de privilégier l'audio.

Selon une autre mise en oeuvre de l'invention, le module M est principalement constitué d'un ensemble d'expressions mathématiques liant la qualité de chaque flot de données constitutif de la session, à différents paramètres de qualité.

La qualité globale $q_i$ de chaque flot de données i peut s'exprimer sous la forme :

$$q_i = \sum_{j=1}^{n} \alpha_j \cdot p_j$$

dans laquelle n est le nombre de paramètre de qualité et $\alpha_i$ est l'impact du paramètre de qualité $p_i$ sur la qualité globale $q_i$.

Selon une variante, cette formule mathématique peut être exprimée sous la forme d'un vecteur ($\alpha_1$, $\alpha_2$, $\alpha_3$... $\alpha_n$). Cette formulation a le mérite de permettre une transmission pratique, dans un message $P_A$, plus aisée et se rapproche de la troisième mise en oeuvre. Elle est toutefois moins souple que l'utilisation d'une expression mathématique puisque ne permettant que l'expression de dépendances linéaires entre les paramètres de qualité $p_i$ et les qualités globales $q_i$.

Le dispositif d'accès $R_A$, ayant connaissance des expressions mathématiques (sous forme de formule, ou sous forme de vecteur), peut mettre en oeuvre différentes stratégies afin de minimiser l'impact global de la dégradation. Ces stratégies sont similaires à celles précédemment décrite pour la troisième mise en oeuvre.

Selon une autre mise en oeuvre de l'invention, l'information nécessaire à la dégradation sélective d'un des flots de données d'une session est disponible sur un serveur de règles.

Ce serveur de règle peut typiquement être un point de décision de règles de police ou PDP (*Policy Decision Point*), tel que décrit dans le RFC 2748 de l'IETF.

Dans cette situation, le dispositif d'accès $R_A$ agit comme un point de mise en oeuvre de règles de police ou PEP (*Policy Enforcement Point*), et il demande au serveur de règles (PDP), les règles à mettre en oeuvre pour la dégradation des flots d'une même session.

Ces règles peuvent être demandées soit de façon préventive, par exemple lors de la mise en route du dispositif d'accès ou à intervalles réguliers, ou bien sur ordre d'une station de gestion externe..., soit de manière réactive, par exemple lors de l'établissement d'une session ou bien lorsqu'une congestion est détectée.

Le dispositif d'accès et le serveur de règles peuvent être conformes à l'architecture logicielle CORBA (*Common Object Request Broker Architecture*) de l'OMG (*Open Management Group*). Les communications entre les dispositifs d'accès et le serveur de règles peuvent également être conformes à ce protocole CORBA.

Le dispositif d'accès $R_A$ peut typiquement être composé d'un ou plusieurs éléments de réseau, notamment des routeurs IP.

La figure 4 illustre un exemple d'architecture fonctionnelle d'un routeur IP.

Un routeur IP s'articule autour d'une matrice de commutation CM à laquelle sont connectés un ensemble de files d'attente d'entrée $FI_1$, $FI_2$, $FI_3$...$FI_n$ et un ensemble de files d'attente de sortie $FO_1$, $FO_2$, $FO_3$... $FO_p$.

Deux organes d'ordonnancement ou « *schedulers* » selon la terminologie en langue anglaise, $SCH_I$ et $SCH_O$ ont pour rôle de déterminer l'ordre de traitement des files d'attentes, respectivement d'entrée et de sortie.

Le module M peut alors être chargé au sein de ces organes d'ordonnancement afin de modifier leur politique de traitement des files d'attente.

Par ailleurs, dans certaines situations, la détermination de la qualité finale des informations transmises est subjective, c'est-à-dire uniquement (ou plus facilement ou précisément) appréciable par un être humain.

Aussi, l'application cliente A peut déterminer le module M adéquat, en coopération avec le ou les utilisateurs finals. Cette coopération peut prendre la forme de paramètres de configuration du logiciel de l'application cliente A.

**Revendications**

1. Dispositif d'accès ($R_A$) à un réseau de télécommunication (N) comportant

    • des moyens pour transmettre des flots de données entre au moins un premier client de télécommunication (A) connectés audit réseau de télécommunication au moyen d'un réseau d'accès ($N_A$) possédant des performances de débits moindres que ledit réseau de télécommunication (N) et au moins un second client de télécommunication (B, S) accessible au travers dudit réseau de télécommunication (N), lesdits flots d'information étant organisés en session, chaque flot de données d'une même session mettant en relation les mêmes clients de télécommunication, et
    • des moyens de dégradation pour dégrader au moins un paramètre de qualité d'au moins un desdits flots de données afin de pallier la différence de débits entre ledit réseau de télécommunication et ledit réseau d'accès,

    **caractérisé en ce que** lesdits moyens de dégradation font appel à un module associé à chaque session, pour réaliser ladite dégradation, ledit module étant déterminé par ledit premier client (A).

2. Dispositif d'accès selon la revendication 1, dans lequel ledit module est principalement constitué du code exécutable permettant la dégradation dudit au moins un paramètre de qualité.

3. Dispositif d'accès selon la revendication 2 dans lequel ledit module est transmis dans la charge utile d'un paquet actif transmis par ledit premier client (A).

4. Dispositif d'accès selon la revendication 2, dans lequel ledit module est téléchargé depuis un serveur de codes et identifié par un identificateur contenu dans un paquet actif transmis par ledit premier client.

5. Dispositif d'accès selon la revendication 1, dans lequel ledit module est principalement constitué d'un ensemble de tables mettant en correspondance pour chaque flot de données de ladite session, les paramètres de qualité et les impacts d'une dégradation de ces paramètres de qualité sur la qualité dudit flot de données.

6. Dispositif d'accès selon la revendication 1, dans lequel ledit module est principalement constitué d'un ensemble d'expressions mathématiques liant, pour chaque flot de données de ladite session, les paramètres de qualité et les impacts d'une dégradation de ces paramètres de qualité sur la qualité dudit flot de données.

7. Dispositif d'accès selon la revendication 1, dans lequel ledit premier client détermine ledit module en coopération avec l'utilisateur final, notamment au moyen de paramètres de configuration.

8. Dispositif d'accès selon la revendication 1, dans lequel ledit module est constitué d'un ensemble de règles de police fourni par un serveur de règles.

9. Dispositif d'accès selon la revendication précédente, dans lequel les communications avec le serveur de règles sont conformes au protocole CORBA.

# FIG_1

# FIG_2a

# FIG_2b

## FIG_3

## FIG_4